# EUROPEAN PATENT APPLICATION

(11) **EP 3 219 956 A2**
(43) Date of publication of application: **20.09.2017**
(21) Application number: 17156267.1
(22) Date of filing: 15.02.2017
(51) Int. Cl.: F02C 6/08, F01D 25/16, F01D 11/06, F01D 3/04, F02C 9/18, F04D 27/02

(54) **TURBINE ENGINE EJECTOR THROAT CONTROL**

(30) Priority: 24.02.2016 IN 201641006329
(71) Applicant: General Electric Company, Schenectady, NY 12345 (US)
(72) Inventor: SINHA, Nishant Kumar, 560067 Bangalore, Karnataka (IN); RAJU, Sanjay, 560091 Bangalore (IN); WANKHADE, Rajendra Mahadeorao, 560066 Bangalore, Karnataka (IN)
(74) Representative: Williams, Andrew Richard

(57) **Abstract**

An apparatus and method for providing a pressurized air supply (88) to a balance piston assembly (94) to balance an axial load on a gas turbine engine compressor (22). The pressurized air supply (88) can be supplied by a mixing valve (144) mixing a primary (140) and secondary pressure bleed air supply (142) relative to feedback received from the balance piston assembly (94) to maintain a predetermined pressure at the balance piston assembly (94).

## Description

### FIELD OF THE INVENTION

In gas turbine engines, a portion of the total airflow from the compressor inlet is diverted to cool various turbine components. The diverted air, however, may consume a large portion of the total airflow through the compressor. The management and control of these parasitic flows therefore can increase the overall performance of the turbine engine.

### BACKGROUND OF THE INVENTION

Typically, air is extracted under pressure from the compressor for use as a cooling, sump pressurization, and load control flow for the various turbine components and thus bypasses the combustion system. Ejectors are often useful for this purpose and can extract air from two different stages of the compressor. The extraction ports, however, often provide cooling airflow at too high a pressure and/or temperature. By employing an ejector, the low pressure or temperature airflow can be mixed with the high pressure or temperature airflow to provide an airflow at an intermediate pressure and temperature substantially matching the pressure and temperature required, while simultaneously making use of the low pressure and temperature airflow that otherwise might be dissipated as wasted energy.

More specifically, an ejector system can provide pressurized air to a balance piston assembly within the turbine rear frame. The balance piston assembly utilizes the pressurized air to reduce an axial load on a bearing at the compressor. Thus, providing appropriate pressure to the balance piston assembly is desirable to maintain a proper load on the bearing.

### BRIEF DESCRIPTION OF THE INVENTION

In one aspect, embodiments of the invention relate a gas turbine engine including a drive shaft, a compressor section mounted to the drive shaft, a turbine section mounted to the drive shaft aft of the compressor section, a bearing abutting the compressor section, and a pressure-operated balance piston abutting the turbine section and applying an axial force to the turbine section to urge the turbine section and compressor section against the bearing. The engine further includes an air pressure supply having a primary bleed air supply fluidly coupled to a first portion of the compressor having a first pressure, a second bleed air supply fluidly coupled to a second portion of the compressor having a second pressure lower than the first pressure, a mixed air supply fluidly coupled to the pressure-operated balance piston having a third pressure, and a mixing valve proportionally coupling the primary and secondary bleed air supplies to the mixed air supply in response to first, second, and third pressures to maintain a predetermined third pressure.

In another aspect, embodiments of the invention relate to an ejector for a gas turbine engine including a secondary conduit having an outlet and a mixing chamber upstream of the outlet and a primary conduit having a variable area throat located within the secondary conduit and upstream of the mixing chamber.

In yet another aspect, embodiments of the invention relate to a gas turbine engine including a compressor section and turbine section axially arranged on a common drive shaft between a bearing and a pressure balance piston applying an axial force urging the compressor section and turbine section toward the bearing. An ejector with a variable area throat fluidly couples primary and secondary bleed air sources to different pressure to a mixing chamber downstream of the throat and supplies mixed air from the primary and secondary bleed air sources to the balance piston.

In yet another aspect, embodiments of the invention relate to a method of providing pressurized air to a pressure balance piston of a gas turbine engine comprising sensing a first pressure at a first compressor bleed air supply, sensing a second pressure at a second compressor bleed air supply having a lesser pressure than the first pressure, sensing a third pressure at the pressure balance piston, and mixing the air from the first and second bleed air supplies in the proportion to the first, second, and third pressures.

### BRIEF DESCRIPTION OF THE DRAWINGS

In the drawings:
FIG. 1 is a schematic, sectional view of a gas turbine engine.
FIG. 2 is a cross-sectional view of a turbine rear frame with a balance piston cavity.
FIG. 3 is a schematic view of the gas turbine engine of FIG. 1 with an ejector assembly coupled to the balance piston cavity.
FIG. 4 is a side view of the ejector assembly of FIG. 2.
FIG. 5 is a side view of an ejector in an open position.
FIG. 6 is a side view of the ejector of FIG. 5 in a closed position.
FIG. 7 is a rear view of the ejector of FIG. 5 looking forward.
FIG. 8 is a flow chart illustrating a method of providing pressurized air to a balance piston.

### DETAILED DESCRIPTION

The described embodiments of the present invention are directed to an ejector having a variable area throat, which may be used to provide pressurized bleed airflow to a balance piston in a gas turbine engine. For purposes of illustration, the present invention will be described with respect to the turbine for an aircraft gas turbine engine having a balance piston. It will be understood, however, that the invention is not so limited and may have general applicability within an engine, including compressors, as well as in non-aircraft applications, such as other mobile applications and non-mobile industrial, commercial, and residential applications. The invention is also not limited to just controlling the supply of air to a balance piston.

As used herein, the term "forward" or "upstream" refers to moving in a direction toward the engine inlet, or a component being relatively closer to the engine inlet as compared to another component. The term "aft" or "downstream" used in conjunction with "forward" or "upstream" refers to a direction toward the rear or outlet of the engine relative to the engine centerline.

Additionally, as used herein, the terms "radial" or "radially" refer to a dimension extending radially between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, aft, etc.) are only used for identification purposes to aid the reader's understanding of the present invention, and do not create limitations, particularly as to the position, orientation, or use of the invention. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

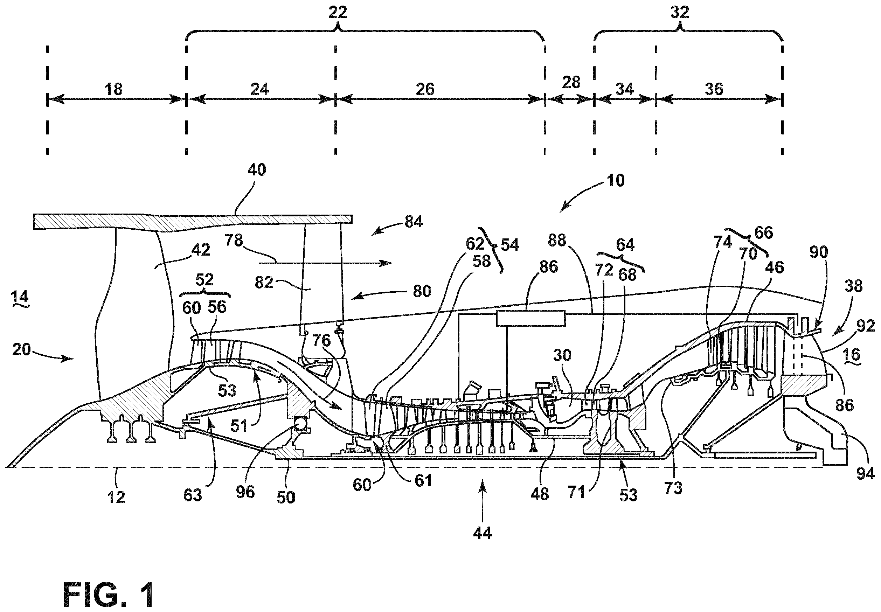

FIG. 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by core casing 46, which can be coupled with the fan casing 40.

A HP spool or HP drive shaft 48 disposed coaxially about the centerline 12 of the engine 10 drivingly connects the HP turbine 34 to the HP compressor 26. A LP spool or LP drive shaft 50, which is disposed coaxially about the centerline 12 of the engine 10 within the larger diameter annular HP drive shaft 48, drivingly connects the LP turbine 36 to the LP compressor 24 and fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. The compressor blades 56, 58 can rotate about a compressor rotor 51. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned upstream of and adjacent to the rotating blades 56, 58. It is noted that the number of blades, vanes, and compressor stages shown in FIG. 1 were selected for illustrative purposes only, and that other numbers are possible.

The blades 56, 58 for a stage of the compressor can be mounted to a disk 51, which is mounted to the corresponding one of the HP and LP drive shafts 48, 50, with each stage having its own disk 51, 61. The vanes 60, 62 for a stage of the compressor can be mounted to the core casing 46 in a circumferential arrangement.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the centerline 12, from a blade platform to a blade tip, while the corresponding rotating blades 68, 70 are positioned upstream of and adjacent to the static turbine vanes 72, 74. It is noted that the number of blades, vanes, and turbine stages shown in FIG. 1 were selected for illustrative purposes only, and that other numbers are possible.

The blades 68, 70 for a stage of the turbine can be mounted to a disk 71, which is mounted to the corresponding one of the HP and LP drive shafts 48, 50, with each stage having its own disk 71, 73. The vanes 72, 74 for a stage of the compressor can be mounted to the core casing 46 in a circumferential arrangement.

The portions of the engine 10 mounted to and rotating with either or both of the drive shafts 48, 50 are also referred to individually or collectively as a rotor 53. The stationary portions of the engine 10 including portions mounted to the core casing 46 are also referred to individually or collectively as a stator 63.

In operation, the airflow exiting the fan section 18 is split such that a portion of the airflow is channeled into the LP compressor 24, which then supplies pressurized ambient air 76 to the HP compressor 26, which further pressurizes the ambient air. The pressurized air 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP drive shaft 50 to rotate the fan 20 and the LP compressor 24.

A remaining portion of the airflow 78 bypasses the LP compressor 24 and engine core 44 and exits the engine assembly 10 through a stationary vane row, and more particularly an outlet guide vane assembly 80, comprising a plurality of airfoil guide vanes 82, at the fan exhaust side 84. More specifically, a circumferential row of radially extending airfoil guide vanes 82 are utilized adjacent the fan section 18 to exert some directional control of the airflow 78.

Some of the ambient air supplied by the fan 20 can bypass the engine core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid can be, but is not limited to, fluid discharged from the LP compressor 24 or the HP compressor 26. The HP compressor 26 can fluidly couple to a bleed air system 86 for providing a supply of pressurized air 88 to the engine 10 aft of the compressor section 22 as well as additional portions of the engine 10. The supply of pressurized bleed air 88 can be supplied to a turbine rear frame 90 having a plurality of circumferentially arranged struts 92. The struts 92 can orient a flow of air moving through the engine core 44 in an axial direction. The pressurized air supply 88 passes through one or more struts 92 into a balance piston assembly 94. The balance piston assembly 94 is coupled to a bearing 96 via the LP drive shaft 50, being mounted radially inboard of the compressor section 22. During engine operation, the bearing 96 is susceptible to an axially aft force. The balance piston assembly 94 provides an axially forward force through the drive shaft 50 to reduce the axial load on the bearing 96.

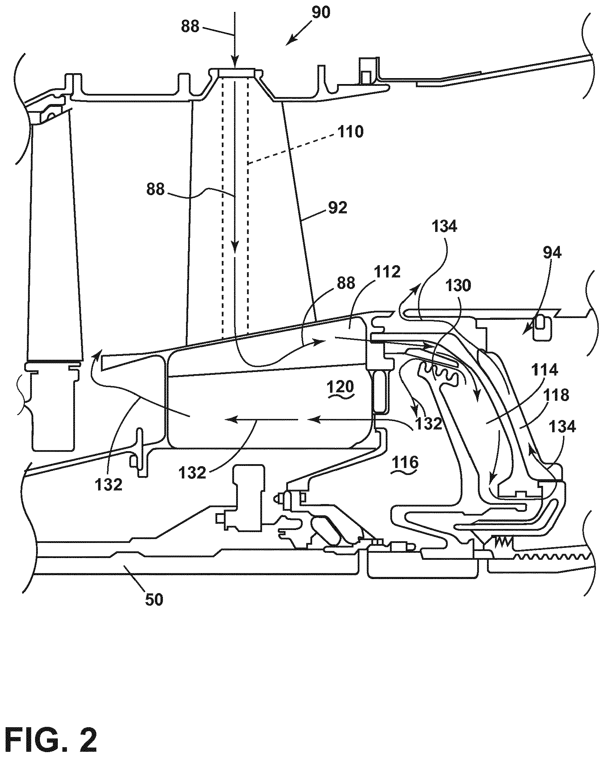

Looking at FIG. 2, a close up view of the turbine rear frame 90 and the balance piston assembly 94 illustrates the supply of pressurized air 88 provided to the balance piston assembly 94. A conduit 110 disposed within the strut 92 fluidly couples to a first inboard cavity 112. A balance piston cavity 114 is in fluid communication with the first inboard cavity 112. The balance piston cavity 114 fluidly couples to a forward cavity 116 and an aft cavity 118 for providing a flow of pressurized air forward and aft of the balance piston cavity 114, respectively. A second inboard cavity 120 is disposed forward of and in fluid communication with the forward cavity 116.

A seal 130 at least partially defines the balance piston cavity 114 and is coupled to the drive shaft 50. The seal 130 can selectively feed a flow of air from the balance piston cavity 114 to the forward cavity 116 based upon the pressure of the balance piston cavity 114.

In operation, the supply of pressurized air 88 is provided to the conduit 110 within the strut 92 from the bleed air system 86. The pressurized air 88 passes from the conduit 110 into the first inboard cavity 112 where it is fed to the balance piston cavity 114. The pressurized air 88 is used to pressurize the balance piston cavity 114. The pressurized balance piston cavity 114 delivers an axially forward force against the seal 130, which provides the forward force to the drive shaft 50, being coupled to the bearing 96. As such, the pressure within the balance piston cavity 114 is used to balance the load on the bearing 96 by providing the axially forward force to balance the axially aft force generated against the compressor section 22 during engine operation.

The pressurized air 88 within the balance piston cavity 114 can exhaust forward through the seal 130 to the forward cavity 116 as a forward airflow 132 or aft to the aft cavity 118 as an aft airflow 134. The forward airflow 132 can pass through the second inboard cavity 120 and exhaust forward of the strut 92 and the aft airflow 134 can exhaust aft of the strut 92.

It should be appreciated that pressure provided to the balance piston assembly 94 and the pressure within the balance piston cavity 114 can be variable. In order to properly balance the bearing 96, it is desirable to maintain a predetermined pressure within the balance piston cavity 94 by providing a consistent air pressure to the balance piston cavity 94 in order to maintain a proper load on the bearing 96.

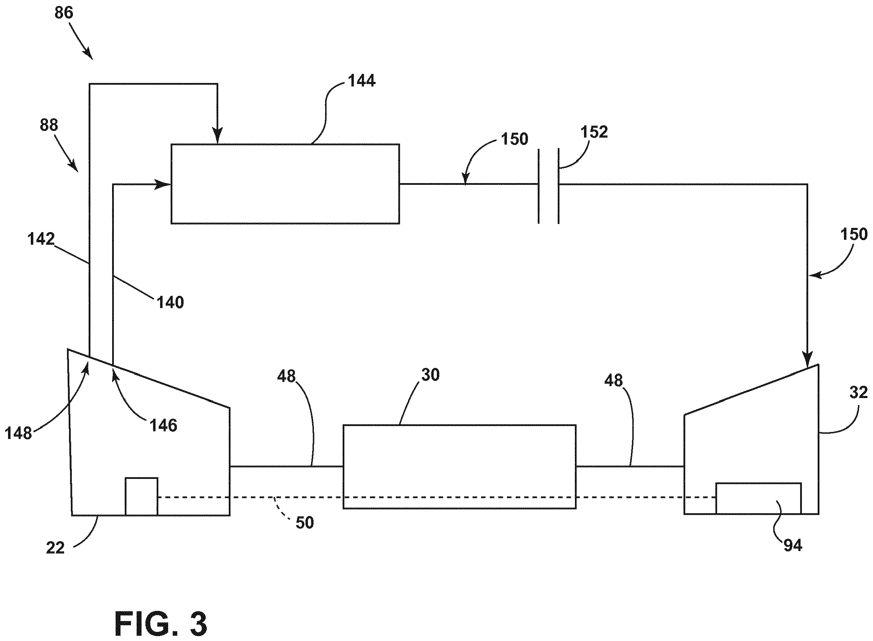

Looking at FIG. 3, a schematic view illustrates the bleed air system 86 for providing a supply of pressurized air 88 to the balance piston assembly 94. A primary bleed air supply 140 and a secondary bleed air supply 142 can feed the pressurized air 88 to a mixing valve 144 from a first and second portion 146, 148 of the compressor 22, respectively. The primary bleed air supply 140 is fed from the first portion 146 disposed aft or downstream of the second portion 148. As such, the primary bleed air supply 140 feeds the mixing valve 144 with the supply of pressurized air 88 at a first air pressure being a higher air pressure relative to the second air pressure fed from the secondary bleed air supply 142. The mixing valve 144 feeds a mixed air supply 150 to the balance piston assembly 94 at third pressure. The third pressure can be maintained at a predetermined pressure that can be based upon feedback from the balance piston assembly 94. As such, the mixing valve 144 can proportionally couple the primary and secondary bleed air supplies 140, 142 to maintain the predetermined third pressure. Optionally, an orifice plate 152 can be included within the mixed air supply 150 to meter the flow from the mixing valve 144 to the balance piston assembly 94. The orifice plate 152 can be beneficial for balancing the air pressures between operational and ambient conditions.

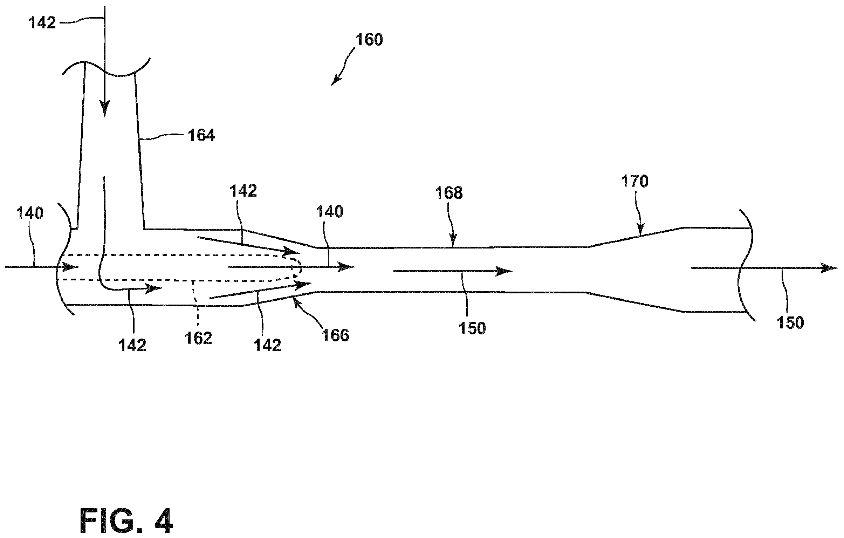

Looking at FIG. 4, a schematic view of an ejector 160 can be disposed within the mixing valve 144. The ejector 160 can include a primary conduit 162 and a secondary conduit 164. The primary conduit 162 can feed the primary bleed air supply 140 to the ejector 160 and the secondary conduit 164 can feed the secondary bleed air supply 142 to the ejector 160. The ejector 160 can further include a converging section 166, a mixing section 168, and a diverging section 170. The primary and secondary bleed air supplies 140, 142 can be mixed within the converging section 166, accelerating the airflow into a mixing section 168 where the bleed air supplies 140, 142 mix. The mixed air supply 150 flows into the diverging section 170 where the mixed air supply 150 can be decelerated as pressurized air supplied to the balance piston assembly 94.

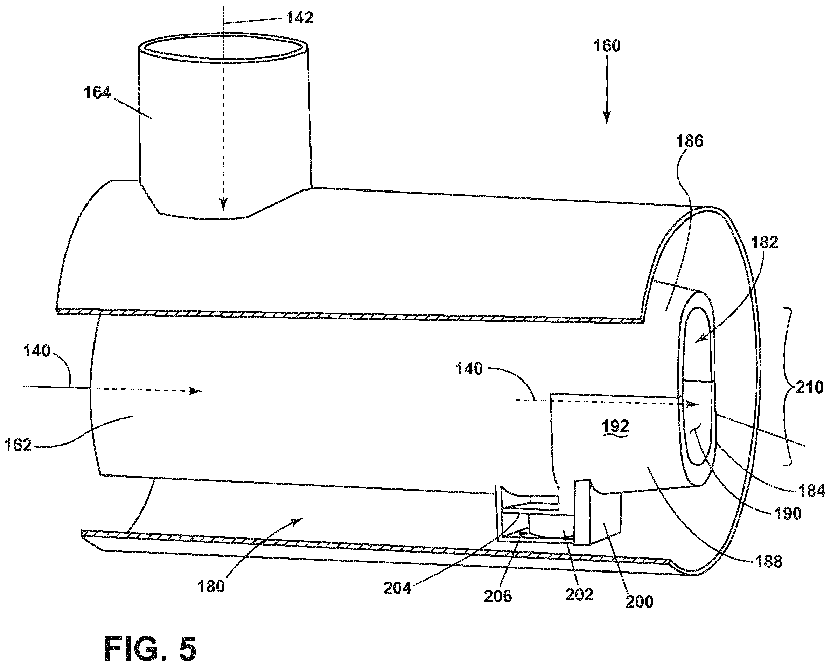

FIG. 5 illustrates the ejector 160 having the secondary conduit 164 further including a conduit chamber 180 between the primary conduit 162 and the secondary conduit 164. The primary conduit 162 includes an outlet 182 located within the conduit chamber 180 fluidly coupling the primary bleed air supply 140 to the conduit chamber 180. The primary bleed air supply 140 fed from the primary conduit 162 can mix with the secondary bleed air supply 142 downstream of the outlet 182.

A variable ejector throat 184 can further define outlet 182. The variable ejector throat 184 can include a fixed portion 186 and a movable portion 188. The movable portion 188 can move relative to the fixed portion 186 to partially open or close the variable ejector throat 184. The movable portion 188 can have a first surface 190 exposed to the primary bleed air supply 140 and a second surface 192 exposed to the secondary bleed air supply 142.

The ejector 160 can further include a housing 200 mounted to the fixed portion 186 and disposed adjacent to the movable portion 188. The housing 200 can house a biasing element 202, which can be a spring or similar in non-limiting examples. The biasing element 202 can be sandwiched between the housing 200 and a biasing surface 204. The biasing surface 204 contacts the movable portion 188 such that the biasing element 202 can bias the movable portion 188 via the biasing surface 204 relative to the housing 200 and the fixed portion 186. The housing 200 can have an aperture 206 fluidly coupling the interior of the housing 200 to the conduit chamber 180.

The variable ejector throat 184, as shown in FIG. 4, is in an open position defining an open distance 210 for the outlet 182. In the open position, the biasing surface 204 is spaced from the bottom of the fixed portion 186, having the biasing element 202 at least partially compressed. During operation, the balance piston assembly 94 can provide feedback to the ejector 160 through the pressure of the mixed air supply 150. The pressure of the mixed air supply 150 will increase or decrease the pressure within the housing 200 through the aperture 206. The increase or decrease of pressure within the housing 200 will cause the biasing element 202 to actuate the biasing surface 204 which moves the movable portion 188 relative to the fixed portion 186 to open and close the variable ejector throat 184.

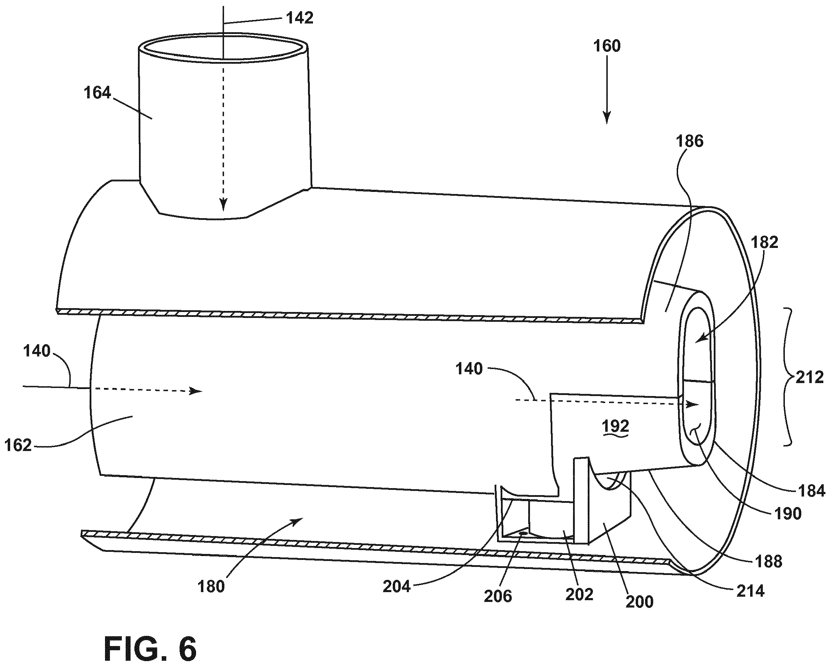

Looking now at FIG. 6, an increased pressure of the mixed air supply 150 from feedback from the balance piston assembly 94 can increase the pressure within the housing 200 providing a closing force to the movable portion 188. The biasing element 202 pushes the biasing surface 204 to move the movable portion 188 toward a closed condition having a closed distance 212. It should be appreciated that in a closed condition, the outlet 182 is not fully closed, permitting at least a portion of the primary bleed air supply 140 to pass through the outlet 182. In the closed condition, a gap 214 is created between the housing 200 and the bottom of the movable portion 188.

Thus as pressure increases at the balance piston assembly 94, the pressure feedback is passed through the mixed air supply 150 to the housing 200. As pressure within the housing 200 increases, the outlet 182 closes and as pressure within the housing 200 decreases, the outlet 182 opens. As the outlet 182 opens and closes, the amount of the primary bleed air supply 140 provided through the primary conduit 162 increases and decreases, respectively, metering the airflow provided from the primary conduit 162. Thus, by metering the airflow provided from the primary conduit 162, the pressure supplied to the balance piston assembly 94 can be metered. It should be appreciated, then, that the balance piston assembly 94 provides air pressure feedback via the mixed air supply 150 to determine the air pressure being supplied from the primary bleed air supply 140. This way the balance piston assembly 94 can automatically define and maintain predetermined air pressure being supplied thereto.

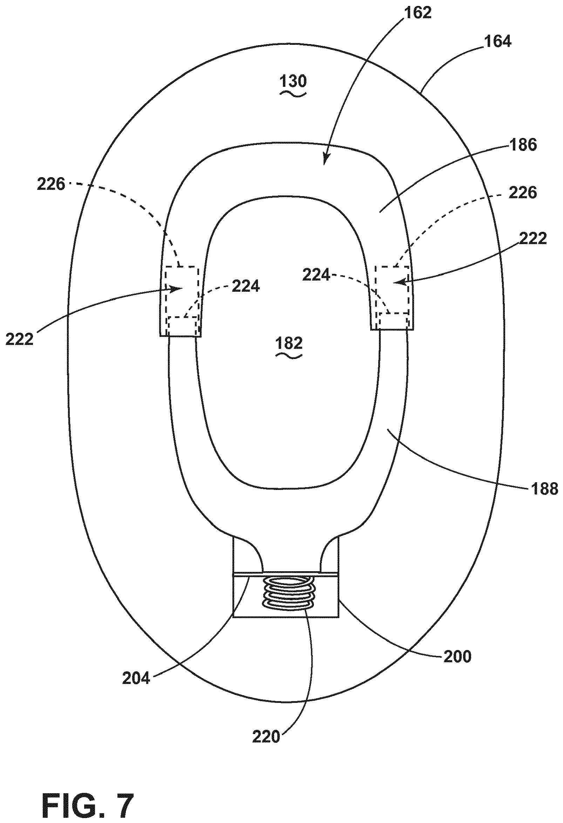

Turning now to FIG. 7, the biasing element 202 can be a spring 220 to actuate the movable portion 188 relative to the fixed portion 186. The fixed portion 186 can include two cavities 222. The cavities 222 are shaped to receive two upper ends 224 of the movable portion 188 during actuation of the spring 220. The cavities 222 permit the actuation of the movable portion 188 and provide a terminal surface 226 to define a minimum value for the closed distance 212. Thus, the size and dimension of the housing 200 and the size of the cavity 222 can determine maximum and minimum positions for the movable portion 188 to define a maximum and minimum flow rate or air pressure that can be fed from the primary conduit 162. These maximum and minimums can be determined respective of the desired predetermined air pressure to be supplied to the balance piston assembly 94.

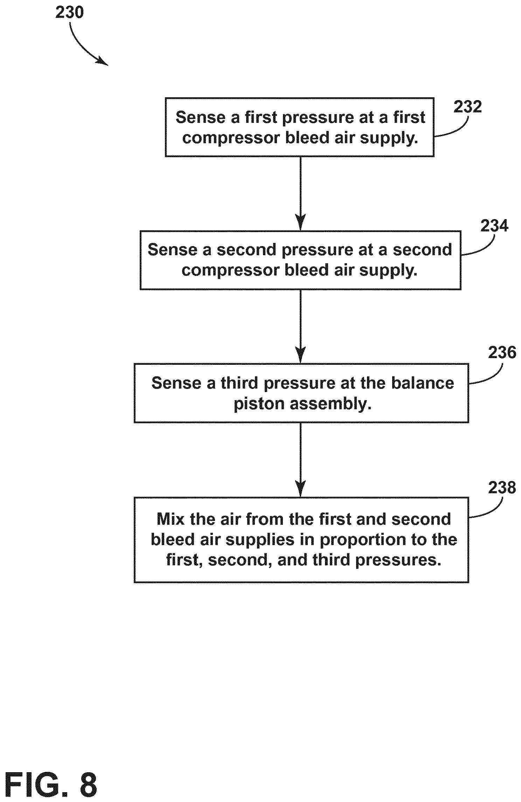

Looking at FIG. 8, a method 230 can utilize the engine 10 having the ejector 160 to provide pressurized air to the balance piston assembly 94. The method 230 can include, at 232, sensing a first pressure at a first compressor bleed air supply. The first pressure can be the primary bleed air supply 140 fed through the primary conduit 162. At 234, the method 230 further includes sensing a second pressure at a second compressor bleed air supply having a pressure that is less than the first pressure. The second pressure can be the secondary bleed air supply 142 fed from the secondary conduit 164 at a pressure lesser than the primary bleed air supply 140. At 236, the method 230 further includes sensing a third pressure at the balance piston assembly 94. The mixed air supply 150 provided to the balance piston assembly 94 can be used to determine the third pressure as fed to the balance piston assembly 94. At 238, the air can be mixed from the first and second bleed air supplies in proportion to the first, second, and third pressures. The ejector 160 having the movable portion 188 can receive feedback from the third pressure at the balance piston assembly 94 to actuate the biasing element 202 in the housing 200 based upon that feedback. The biasing element 202 proportionately controls the primary bleed air supply 140 fed from the primary conduit 162 to mix the first and second bleed air supplies in proportion to the first, second, and third pressures. The ejector 160 can automatically control the ratio of the first and second bleed air supplies fed from the primary and secondary conduits 162, 164 via the biasing element 202. Controlling the ratio of the first and second bleed air supplies can achieve a predetermined third pressure fed to the balance piston assembly 94 and can be based upon the first and second pressures from the primary and secondary bleed air supplies 140, 142 to set the predetermined third pressure.

It should be appreciated that the variable ejector throat 184 provides for automatic throat control utilizing the movable portion 188 coupled to the biasing element 202. The automatic throat control is based upon feedback air pressure from the balance piston assembly 94 to open or close the outlet 182 relative to the feedback to increase or decrease the air pressure fed from the primary conduit 162. The outlet 182 automatically opens or closes based upon the feedback to maintain a predetermined air pressure fed to the balance piston assembly 94. It should be further appreciated that the apparatus and method described herein utilizes a minimal amount of parts and required reduced manual intervention such as repair and servicing. Furthermore, the apparatus and method provides optimal air pressure to the balance piston assembly 94 to improve engine efficiency and overall engine performance, while reducing the risk of engine shutdown due to an unbalanced load.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A turbine engine comprising:
   a drive shaft;
   a compressor section mounted to the drive shaft;
   a turbine section mounted to the drive shaft aft of the compressor section;
   a bearing abutting the compressor section;
   a pressure-operated balance piston assembly applying an axial force to the compressor section to urge the compressor section axially forward to reduce an axial load on the bearing; and
   an air-pressure supply comprising a primary bleed air supply fluidly coupled to a first portion of the compressor having a first pressure, a secondary bleed air supply fluidly coupled to a second portion of the compressor having a second pressure lower than the first pressure, a mixed air supply fluidly coupled to the pressure-operated balance piston assembly having a third pressure, and a mixing valve proportionally coupling the primary and secondary bleed air supplies to the mixed air supply in response to first, second, and third pressures to maintain a predetermined third pressure.
2. The turbine engine of clause 1, wherein the third pressure is maintained within a predetermined range.
3. The turbine engine of clause 1 or 2, wherein air-pressure supply comprises an ejector having a secondary conduit extending from the second portion to the pressure-operated balance piston assembly, and a primary conduit having an outlet located within the secondary conduit.
4. The turbine engine of any preceding clause, comprising a variable area ejector throat defining the outlet.
5. The turbine engine of any preceding clause, wherein the variable area ejector throat comprises at least one movable portion having a first surface fluidly exposed to the primary bleed air supply and a second surface fluidly exposed to the mixed air supply.
6. The turbine engine of any preceding clause, comprising a biasing element applying a closing force to the movable portion to urge the movable portion toward a closed condition.
7. The turbine engine of any preceding clause, wherein the variable area ejector throat comprises a fixed portion opposite the movable portion.
8. The turbine engine of any preceding clause, comprising a spring housing mounted to the primary conduit and the biasing element comprises a spring located within the spring housing and abutting the spring housing and the movable portion to apply a closing force to the movable portion.
9. An ejector for a turbine engine comprising:
   a secondary conduit having an outlet and a mixing chamber upstream of the outlet; and
   a primary conduit having a variable area throat located within the secondary conduit and upstream of the mixing chamber.
10. The ejector of clause 9, wherein the variable area throat comprises a movable portion having a first element fluidly coupled to the primary conduit and a second element fluidly coupled to the mixing chamber.
11. The ejector of clauses 9 or 10, comprising a biasing element applying a closing force to the movable portion.
12. The ejector of any of clauses 9 to 11, wherein the biasing element comprises a spring applying the closing force to the movable portion.
13. The ejector of any of clauses 9 to 12, wherein the spring constant for the spring is selected based on a function of that expected pressures in the primary conduit and the mixing chamber.
14. The ejector of any of clauses 9 to 13, comprising a spring housing mounted to the primary conduit and the spring located within the spring housing and abutting the movable portion.
15. The ejector of any of clauses 9 to 14, wherein the variable area throat further comprises a fixed portion opposite the movable portion.
16. A turbine engine comprising a compressor section and turbine section axially arranged on a common drive shaft between a bearing and a pressure balance piston applying an axial force urging the compressor section and turbine section forward to reduce a load on the bearing, and an ejector with a variable area throat fluidly coupling primary and secondary bleed air sources of different pressures to a mixing chamber downstream of the throat and supplying mixed air from the primary and secondary bleed air sources to the balance piston.
17. The turbine engine of clause 16, wherein the variable area throat varies in area as a function of the pressures in the mixing chamber and the primary and secondary bleed air sources.
18. The turbine engine of clause 16 or 17, wherein the variable area throat comprises a movable portion having a first element fluidly coupled to a primary conduit and a second element fluidly coupled to the mixing chamber.
19. The turbine engine of any of clauses 16 to 18, comprising a biasing element applying a closing force to the movable portion.
20. The turbine engine of any of clauses 16 to 19, wherein the biasing element comprises a spring applying the closing force to the movable portion.
21. The turbine engine of any of clauses 16 to 20, wherein the spring constant for the spring is selected based on a function of that expected pressures in the primary conduit and the mixing chamber.
22. The turbine engine of any of clauses 16 to 21, comprising a spring housing mounted to the primary conduit and the spring located within the spring housing and abutting the movable portion.
23. The turbine engine of any of clauses 16 to 22, wherein the variable area throat further comprises a fixed portion opposite the movable portion.
24. A method of providing pressurized air to a pressure balance piston of a gas turbine engine comprising sensing a first pressure at a first compressor bleed air supply, sensing a second pressure at a second compressor bleed air supply having a lesser pressure than the first pressure, sensing a third pressure at the pressure balance piston, and mixing the air from the first and second bleed air supplies in proportion to the first, second and third pressures.
25. The method of clause 24, wherein the mixing the air comprising controlling a ratio of the first and second compressor bleed air supplies.
26. The method of clause 24 or 25, wherein the ratio of the first and second bleed air supplies are controlled to achieve a predetermined third pressure.
27. The method of any of clauses 24 to 26, wherein the predetermined third pressure is set based on the first and second pressures.

## Claims

1. A gas turbine engine (10) comprising:
a drive shaft (50);
a compressor section (22) mounted to the drive shaft (50);
a turbine section (32) mounted to the drive shaft (50) aft of the compressor section (22);
a bearing (96) abutting the compressor section (22);
a pressure-operated balance piston assembly (94) applying an axial force to the compressor section (22) to urge the compressor section (22) axially forward to reduce an axial load on the bearing (96); and
an air-pressure supply (88) comprising a primary bleed air supply (140) fluidly coupled to a first portion (146) of the compressor (22) having a first pressure, a secondary bleed air supply (142) fluidly coupled to a second portion (148) of the compressor (22) having a second pressure lower than the first pressure, a mixed air supply (150) fluidly coupled to the pressure-operated balance piston assembly (94) having a third pressure, and a mixing valve (144) proportionally coupling the primary (140) and secondary bleed air supplies (142) to the mixed air supply (150) in response to first, second, and third pressures to maintain a predetermined third pressure.

2. The gas turbine engine (10) of claim 1 wherein the third pressure is maintained within a predetermined range.

3. The gas turbine engine (10) of claim 1 or claim 2, wherein air-pressure supply (88) comprises an ejector (160) having a secondary conduit (164) extending from the second portion (148) to the pressure-operated balance piston assembly (94), and a primary conduit (162) having an outlet (182) located within the secondary conduit (164).

4. The gas turbine engine (10) of claim 3, further comprising a variable area ejector throat (184) defining the outlet (182).

5. The gas turbine engine (10) of claim 4, wherein the variable area ejector throat (184) comprises at least one movable portion (188) having a first surface (190) fluidly exposed to the primary bleed air supply (140) and a second surface (192) fluidly exposed to the mixed air supply (150).

6. The gas turbine engine (10) of claim 5, further comprising a biasing element (202) applying a closing force to the movable portion (188) to urge the movable portion (188) toward a closed condition (212).

7. The gas turbine engine (10) of claim 5 or 6, wherein the variable area ejector throat (184) comprises a fixed portion (186) opposite the movable portion (188).

8. The gas turbine engine (10) of any of claims 5 to 7, further comprising a spring housing (200) mounted to the primary conduit (162) and the biasing element (202) comprises a spring (220) located within the spring housing (200) and abutting the spring housing (200) and the movable portion (188) to apply a closing force to the movable portion (188).

9. The gas turbine engine (10) of any of claims 6 to 8, wherein the biasing element 202) is a spring 220).

10. The gas turbine engine (10) of any preceding claim, wherein air-pressure supply comprises an ejector (160) having a primary conduit (162) and a secondary conduit (164) providing the air to the ejector (160).

11. An ejector for a turbine engine (10) comprising:
a secondary conduit (164) having an outlet and a mixing chamber upstream of the outlet; and
a primary conduit having a variable area throat located within the secondary conduit and upstream of the mixing chamber.

12. A turbine engine (10) comprising a compressor section (22) and turbine section axially arranged on a common drive shaft (50) between a bearing (96) and a pressure balance piston applying an axial force urging the compressor section (22) and turbine section forward to reduce a load on the bearing (96), and an ejector with a variable area throat fluidly coupling primary and secondary bleed air sources (142) of different pressures to a mixing chamber downstream of the throat and supplying mixed air from the primary (140) and secondary (142) bleed air sources to the balance piston.

13. A method of providing pressurized air to a pressure balance piston of a gas turbine engine comprising sensing a first pressure at a first compressor bleed air supply, sensing a second pressure at a second compressor bleed air supply having a lesser pressure than the first pressure, sensing a third pressure at the pressure balance piston, and mixing the air from the first and second bleed air supplies in proportion to the first, second and third pressures.

14. The method of claim 13, wherein the mixing the air comprising controlling a ratio of the first and second compressor bleed air supplies.

15. The method of claim 14, wherein the ratio of the first and second bleed air supplies are controlled to achieve a predetermined third pressure.
